# EUROPEAN PATENT SPECIFICATION

(11) **EP 1 038 661 B1**
(45) Date of publication and mention of the grant of the patent: **23.12.2015**
(21) Application number: 00200925.6
(22) Date of filing: 14.03.2000
(51) Int. Cl.: B29C 59/04, B29K 105/04, B32B 37/12, B32B 38/06, B32B 3/30, B32B 33/00, B32B 5/18, E04F 15/18

(54) **Underfloor foil, method for realizing such underfloor foil, and device applying such method**
Unterflurfolie, Verfahren zur Herstellung, sowie Apparat zur Durchführung dieses Verfahrens
Feuille sous-sol, méthode de réalisation d'une telle feuille, et appareil pour la mise en oeuvre d'un tel procédé

(30) Priority: 22.03.1999 BE 9900199
(43) Date of publication of application: 27.09.2000
(73) Proprietor: NMC S.A., 4731 Eynatten (BE)
(72) Inventor: Vereecke, Thierry Louis Caroline, 8501 Kortrijk (Heule) (BE)
(74) Representative: Office Freylinger

(56) References cited:
- WO-A-99/34972
- BE-A- 880 548
- FR-A- 2 431 012
- GB-A- 1 468 534
- GB-A- 2 173 151
- NL-A- 7 016 950
- US-A- 4 128 688
- US-A- 4 500 596

## Description

The present invention relates to an underfloor foil, more particularly an underlayer which is used under parquet floors and floor pavements in order to realize an efficient insulation in respect to contact sounds and heat losses.

It is known that under parquet floors and floor pavements, mostly an underlayer is placed consisting of a material insulating against heat losses and contact sounds, whereby this underlayer may consist of plastic foam or such, wood, etc.

In the first case as well as in the second, such underlayers have as a disadvantage that moisture present in the floor construction can easily rise through the underlayer, as a result of which, in the case of parquet, the parquet becomes moist and at least will show water circles or even, in certain spots, will be pushed upward by the aforementioned moisture.

It is obvious that thereby, a damage will be caused which can only be remedied by exchanging the parquet.

Elements having a watertight layer to form a barrier for water or water vapour are known for example from GB 2.173.151, which is concerning an automobile carpet, from US 4.128.688 and US 4.500.596, which are concerning laminates for floor or wall covering, and from WO 99/34972, which is concerning a flexible sheet material used for example in clothing.

It is also known that the contact sounds and heat coefficent of the underlayers used up to now, with the exception of an underlayer made of wood, is not sufficient, in other words, does not meet the required standards.

Although an underlayer made of wood does meet these requirements, however, here the disadvantage is known that such underlayer made of wood will become rather thick, namely, approximately 8 mm or more, in order to meet said standards in respect to contact sounds and heat insulation, which has as a disadvantage that the total thickness of the parquet floor becomes too large, especially when such parquet floor is provided in existing buildings, in consideration of the fact that at that moment, not only the door sills will have to be raised, but also the doors will have to be sawn off at their lower edge, with all consequences thereof.

Other elements in the form of panels which are used for insulation in respect to heat losses are for example known from NL 7.016.950, FR 2.431.012, GB 1.468.534 and BE 880.548.

However, all these panels may not be ideal for use in a floor, since they have a considerable thickness and since they may not have desired contact sound insulation characteristics.

Thus, the present invention aims at an underfloor foil having a very efficient contact sound and heat insulation and whereby a passage of moisture is completely excluded and whereby the underfloor foil only has a small thickness, namely, a thickness of approximately 4 mm.

Apart from the fact that such underfloor foil according to the invention, with rather a small thickness, provides for a maximum contact sounds and heat insulation, on one hand, and forms a vapour barrier for moisture present in the actual carrying floor construction, on the other hand, this underfloor foil can be wound up in a very simple manner and it can be brought to the desired dimensions and cut in a very simple manner.

Such underfloor foil substantially consists of at least two parts attached one upon the other, namely, a basic layer of plastic foam and an upper layer of a material impermeable to water and water vapour, whereby channels are provided in the free exterior surface of the basic layer.

The present invention also aims at a method allowing to realize underfloor foil, as described heretofore.

This method substantially consists in peeling-off a basic layer from a block of plastic foam, providing on the thus formed basic layer, by means of glueing, an upper layer of plastic foil, metal foil or similar; applying indentations in said basic layer and fixating these indentations under the influence of heat in order to form channels; possibly forming, in another direction, additional indentations and fixating these indentations under the influence of heat in order to form a second series of channels in the basic layer; and finally compressing the thus formed underfloor foil in order to break the cells of the plastic foam out of which the basic layer is realized, as a result of which a much better elasticity of the material is obtained and, therefore, a much better contact sound insulation.

Finally, the invention also relates to a device applying said method, whereby this device substantially consists of a cutting device which can peel off a basic layer from a block of plastic foam; a feeding device for the upper layer upon which a layer of glue is or becomes provided; a glueing device being provided opposite; a device consisting of a heated roll or roller with longitudinal-directed protrusions or ribs thereupon, whereby said roll cooperates with a pressing roller which, by means of a pressure cylinder, can be placed towards the roll or roller or reverse; a device consisting of a blade with possibly a protruding toothing or of a roll or roller upon which transverse-directed protrusions or ribs are provided, whereby said roll or roller can cooperate with a pressing roller and whereby the roll or roller is fixed at a lever which, in its turn, is connected to a pressure cylinder in order to be able to move the rolls towards each other or away from each other; and a device consisting of two pressing rollers between which the layers are fed in order to break the cells of the basic layer and whereby the pressing roller is fixed on a lever which is controlled by means of a pressure cylinder, in order to move the rolls tighter towards each other, remove in respect to each other, respectively.

With the intention of better showing the characteristics of the invention, hereafter, as an example without any limitative character, a preferred form of embodiment is described of, on one hand, an underfloor foil according to the invention and, on the other hand, a method and device for obtaining said underfloor foil, with reference to the accompanying drawings, wherein:
figure 1 represents a perspective view of a portion of the underfloor foil according to the invention;
figure 2, at a larger scale, represents a cross-section according to line II-II in figure 1;
figure 3, at an even larger scale, represents the part indicated by F3 in figure 2;
figure 4 represents a perspective view from the underside of a portion of underfloor foil according to figure 1;
figure 5 is a view similar to that of figure 4, but for an embodiment variant;
figure 6 represents a schematic illustration of the method according to the invention;
figure 7, in a schematic manner, represents a device applying the method according to figure 6;
figure 8, at a larger scale, represents a view according to arrow F8 in figure 7.

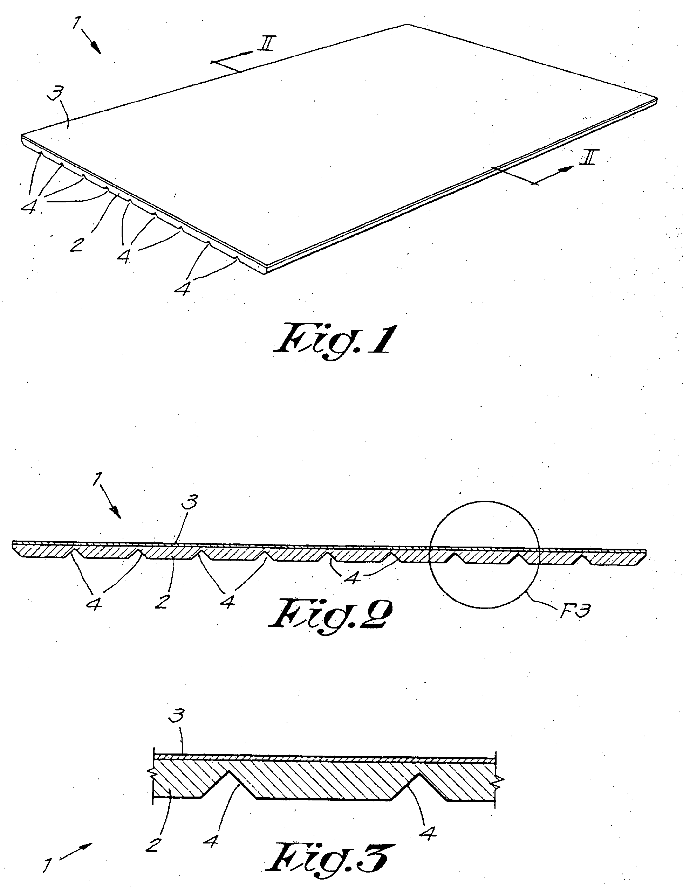

In figures 1 to 4, a portion of the underfloor foil 1 according to the invention is represented which is formed of two parts, namely, a basic layer 2 of plastic foam, preferably polystyrene foam, and an upper layer 3 which can be formed in a material impermeable to water and water vapour, for example, so-called PET foil, PET foil provided with a vapour-deposited or glued-on metal foil, metal foil as such, or similar.

According to the present invention, in the basic layer 2, more particularly in the free exterior side thereof, channels 4 are provided, in this case, triangular channels, which can be obtained by making indentations and heating at the same time.

The basic layer 2 of plastic foam preferably will be pressed together in order to break the plastic cells and to obtain thus a more bendable material with a considerably higher contact insulation.

A thus obtained underfloor foil 1, when provided between a subfloor and a parquet flooring, will allow to obtain an excellent absorption of contact sounds, by the cooperation of the pressed-together basic layer 2 and the channels 4 provided therein.

The channels 4, in fact, provide for that the total surface of the underfloor foil 1 coming into contact with the subfloor will be drastically reduced, such that the acoustic features of the underfloor foil 1, on one hand, are determined by the pressed-together plastic foam and, on the other hand, by said reduced contact surface.

By providing such channels 4, it is in fact obtained that a part of the so-called contact sounds, so to speak, is dissipated in these channels 4.

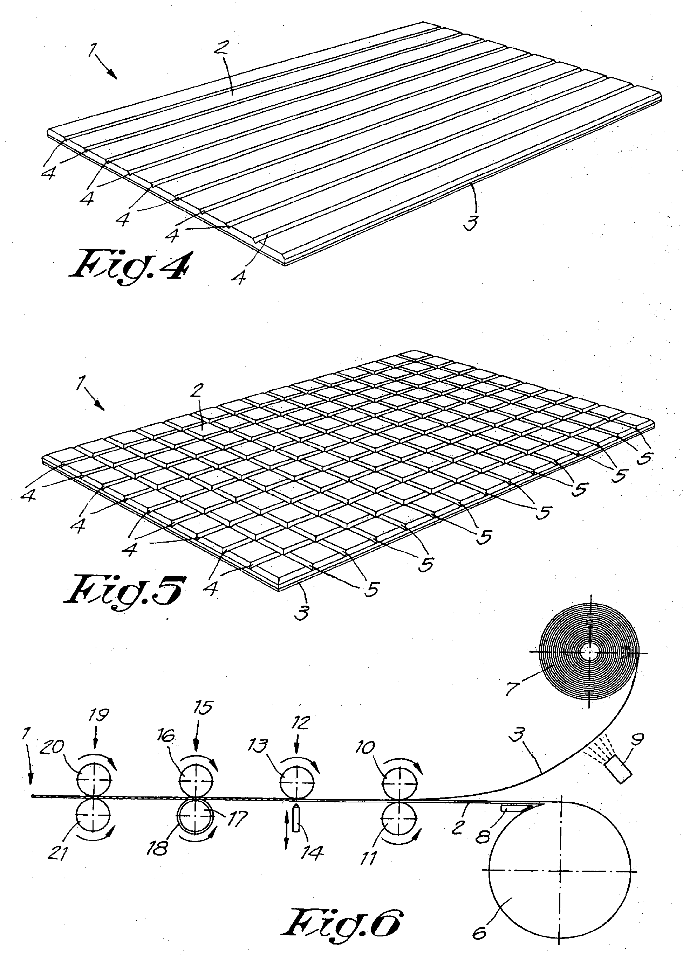

In figure 5, a portion of underfloor foil 1 is represented which is formed in the same manner as described heretofore, but whereby next to the longitudinal channels 4 also transverse-directed channels 5 are provided.

It is clear that by providing channels 4 and 5 as well, the acoustic features of the product still are enhanced, considering that the contact sounds in this manner will be dissipated even better.

Although said channels 4 and possibly 5 in the described examples are parallel to the lateral edges of the parquet foil 1, it is obvious that such channels can be arranged in any other manner, whereby these channels may be provided straight-lined, bent or in another manner.

Such channels 4 may also be provided in more than two directions.

In figure 6, the method according to the invention is represented in a schematic manner, which method consists in that, on one hand, one starts with a block 6 of plastic foam and, on the other hand, of a roll 7 of upper layer 3.

From the block of plastic foam 6, in a known manner, by means of a blade 8, a layer is taken off which results in the basic layer 2.

At the same time, by means of a suitable device 9, for example, by means of spraying, a quantity of glue is applied on one side of the upper layer 3, after which the layer 3 is brought with the glued side onto the basic layer 2 and is pressed on, for example, by means of rollers 10 and 11.

Use can also be made of an upper layer provided with a layer of glue which, by reactivation by means of a heated roller, is glued and pressed onto the basic layer 3.

Subsequently, the thus combined layers 2 and 3 are brought into a device 12 which may consist of, on one hand, a pressing roll 13 and, on the other hand, a blade 14 moving up and down which possibly is provided with a connection in order to obtain the longitudinal channels and which preferably is heated and through which successively the channels 4 in the basic layer 2 are formed. This blade 14 can also be replaced by a heated roller for obtaining the same result.

In a further stage, the layers 2 and 3 are transported through a device 15 which, for example, is formed by a pressing roll 16 and a roll 17 on which transverse-directed ribs 18 are provided and whereby this roll 17, ribs 18, respectively, preferably are heated for forming, in this case, the channels 5.

Finally, the thus formed layers 2 and 3 will be transported through a device 19 formed, for example, by pressing rollers 20 and 21, whereby in this device 19 the basis layer 2 is compressed by rolling in order to break the plastic cells of this basic layer 2.

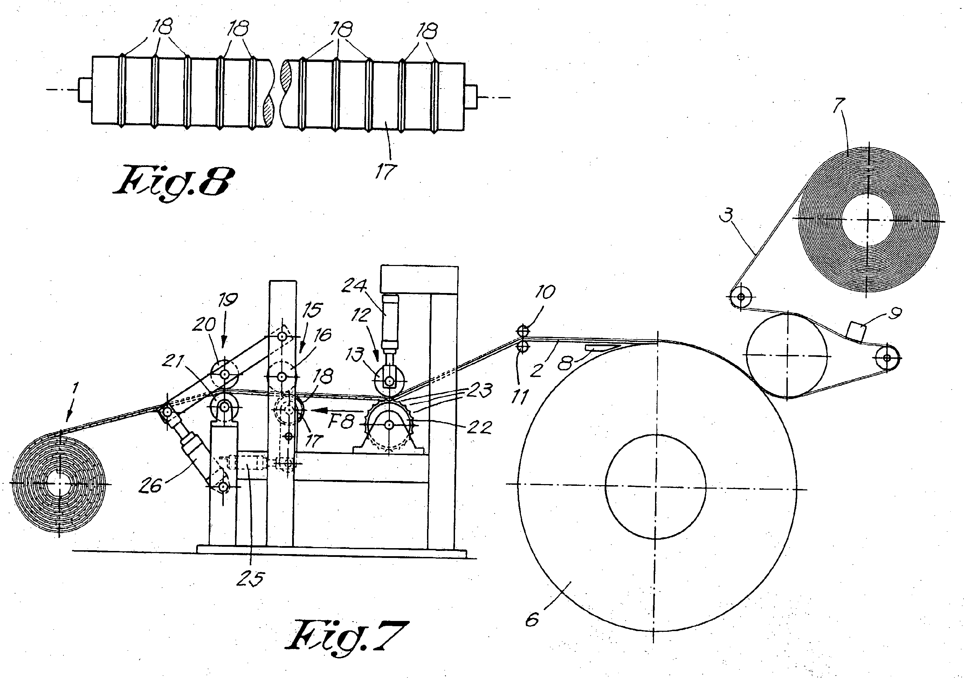

In figure 7, finally, a device is represented in which the method according to the invention is applied.

In this figure, all elements discussed in figure 6 are noted, whereby, however, the blade 14 is replaced by a roll or roller 22 with protrusions or ribs 23 for forming the channels 4 and whereby means are provided, pressure cylinders 24, 25 and 26, respectively, which can control the rolls or rollers 13, 17 and 30 in order to move these to the rolls or rollers 22, 16 or 21, respectively, in order to regulate the pressure between the pairs of rolls.

According to the present invention, thus an underlayer 1 for parquet floors is obtained with, on one hand, a very efficient heat insulation and, on the other hand, a very efficient contact sound insulation in that the contact sounds are absorbed to a maximum extent, whereas this underfloor foil 1 at the same time is provided with an upper layer or moisture barrier 3 which prevents the rising of moisture and water vapour towards the actual parquet floor.

When such underfloor foil 1 is used as an underfloor for a floor pavement, it is possible to fold the underfloor foil upward in order to obtain, so to speak, a sort of container into which the floor pavement material is poured, such that it is obtained that the floor pavement remains completely apart from the carrying structure, such that an optimum contact sound insulation is obtained.

It is obvious that the present invention is in no way limited to the forms of embodiment described by way of example and represented in the accompanying figures, on the contrary, that an underfloor foil according to the invention, as well as the applied method and device for realizing this underfloor foil, can be realized in a variety of forms and dimensions without leaving the scope of the invention.

## Claims

1. An underfloor foil, consisting of at least two parts attached on top of each other, namely, a basic layer (2) of plastic foam, and an upper layer (3) in a material impermeable to water and water vapour, whereby channels (4) are provided in the free exterior side of the basic layer (2), whereby the basic layer (2) consists of a pressed together plastic foam, the cells of which are broken and **characterized in that** channels (4-5) extend in different directions of the basic layer (2), whereby the channels intersect each other.

2. The underfloor foil of claim 1, in which the plastic foam is a polystyrene foam.

3. The underfloor foil of claim 1 or 2 in which the channels (4-5) are straight-lined.

4. The underfloor foil of claim 1 or 2 in which the channels (4-5) are bent.

5. The underfloor foil of claim 1 or 2 in which the channels (4-5) are arranged according to a broken line.

6. The underfloor foil of claims1 to 5, in which the channels (4-5) have a triangular shape.

7. The underfloor foil of claim 1, in which the upper layer (3) is formed of plastic foil.

8. The underfloor foil of claim 7, in which a metal foil is glued or vapour-deposited on said plastic foil.

9. The underfloor foil of claim 1, in which the upper layer (3) is formed by a metal foil.

10. The underfloor foil of claim 1, in which the upper layer (3) is attached to the basic layer (2) by glueing.

11. Method for realizing an underfloor foil according to any of the preceding claims, which comprises the steps of peeling-off a layer (2) from a block of plastic foam (6); providing on the thus formed basic layer (2), by means of glueing, an upper layer (3) of plastic foil, metal foil or similar; applying indentations in said basic layer (2) and fixating these indentations under the influence of heat in order to form channels (4); indentations and fixating these indentations under the influence of heat in order to form channels (5) in the basic layer (2) and finally compressing the thus formed underfloor foil in order to break the cells of the plastic foam out of which the basic layer (2) is realized.

12. A device for realizing underfloor foil by means of the method according to claim 11, which comprises a cutting device (8) which can peel off a basic layer (2) from a block of plastic foam (6); a feeding device for the upper layer (3) upon which a layer of glue is or becomes provided; a device (12) consisting of a blade with toothing or of a roll or roller (22) with thereupon longitudinally-directed pro-trusions or ribs (23), whereby said roll cooperates with a pressing roller (13) which can be moved towards the roll or roller (22) or reverse by means of a pressure cylinder (24); a device (15) consisting of a blade with possibly a protruding toothing or of a roll or roller (17) upon which transverse-directed ribs (18) are provided, whereby said roll or roller (17) can cooperate with a pressing roller (16) and whereby the roll or roller (17) is fixed at a lever which, in its turn, is connected to a pressure cylinder (25) in order to be able to move the rolls (16-17) towards each other or away from each other; and a device (19) consisting of two pressing rollers (20-21) between which the layers (2-3) are fed in order to break the cells of the basic layer (2) and whereby the pressing roller (20) is fixed on a lever which is controlled by means of a pressure cylinder (26), in order to move the rollers (20-21) tighter towards each other, remove in respect to each other, respectively.

## Patentansprüche

1. Unterflurfolie, die aus wenigstens zwei Teilen besteht, die aufeinander befestigt sind, und zwar aus einer Grundschicht (2) aus Kunststoffschaumstoff und einer Oberschicht (3) aus einem Material, das gegenüber Wasser und Wasserdampf undurchlässig ist, wobei Kanäle (4) in der freien Außenseite der Grundschicht (2) vorgesehen sind, wobei die Grundschicht (2) aus einem zusammengepressten Kunststoffschaumstoff besteht, dessen Zellen gebrochen sind, und die **dadurch gekennzeichnet ist, dass** sich Kanäle (4-5) in unterschiedliche Richtungen der Grundschicht (2) erstrecken, wobei die Kanäle einander schneiden.

2. Unterflurfolie nach Anspruch 1, wobei der Kunststoffschaumstoff ein Polystyrolschaum ist.

3. Unterflurfolie nach Anspruch 1 oder 2, wobei die Kanäle (4-5) geradlinig sind.

4. Unterflurfolie nach Anspruch 1 oder 2, wobei die Kanäle (4-5) gekrümmt sind.

5. Unterflurfolie nach Anspruch 1 oder 2, wobei die Kanäle (4-5) gemäß einer gebrochenen Linie angeordnet sind.

6. Unterflurfolie nach Anspruch 5, wobei die Kanäle (4-5) eine Dreieckform aufweisen.

7. Unterflurfolie nach Anspruch 1, wobei die Oberschicht (3) aus einer Kunststofffolie gebildet ist.

8. Unterflurfolie nach Anspruch 7, wobei eine Metallfolie auf die Kunststofffolie geklebt oder aufgedampft ist.

9. Unterflurfolie nach Anspruch 1, wobei die Oberschicht (3) durch eine Metallfolie gebildet ist.

10. Unterflurfolie nach Anspruch 1, wobei die Oberschicht (3) durch Kleben an der Grundschicht (2) angebracht ist.

11. Verfahren zum Ausbilden einer Unterflurfolie nach einem der vorstehenden Ansprüche, welches die folgenden Schritte umfasst: Abziehen einer Schicht (2) von einem Block aus Kunststoffschaumstoff (6); Vorsehen einer Oberschicht (3) aus Kunststofffolie, Metallfolie oder dergleichen auf der somit gebildeten Grundschicht (2) durch Kleben; Anbringen von Vertiefungen in der Grundschicht (2) und Fixieren dieser Vertiefungen unter Einfluss von Wärme, um Kanäle (4) zu bilden; Vertiefungen und Fixieren dieser Vertiefungen unter Einfluss von Wärme, um Kanäle (5) in der Grundschicht (2) zu bilden, und schließlich Komprimieren der somit gebildeten Unterflurfolie, um die Zellen des Kunststoffschaumstoffes, aus der die Grundschicht (2) ausgebildet ist, zu brechen.

12. Vorrichtung zum Ausbilden einer Unterflurfolie durch das Verfahren nach Anspruch 11, welche eine Schneidvorrichtung (8), die eine Grundschicht (2) von einem Block aus Kunststoffschaumstoff (6) abziehen kann; eine Zuführvorrichtung für die Oberschicht (3), auf welcher eine Klebstoffschicht vorgesehen ist oder wird; eine Vorrichtung (12), die aus einer Klinge mit Verzahnung oder aus einer Rolle oder Walze (22) besteht, auf der längs ausgerichtete Vorsprünge oder Rippen (23) vorgesehen sind, wobei die Rolle mit einer Druckwalze (13) zusammenwirkt, die mittels eines Druckzylinders (24) zur Rolle oder Walze (22) hin oder umgekehrt bewegt werden kann; eine Vorrichtung (15), die aus einer Klinge gegebenenfalls mit einer vorstehenden Verzahnung oder einer Rolle oder Walze (17) besteht, auf welcher quer ausgerichtete Rippen (18) vorgesehen sind, wobei die Rolle oder Walze (17) mit einer Druckwalze (16) zusammenwirken kann und wobei die Rolle oder Walze (17) an einem Hebel befestigt ist, der wiederum mit einem Druckzylinder (25) verbunden ist, um in der Lage zu sein, die Walzen (16-17) aufeinander zu oder voneinander weg zu bewegen; und eine Vorrichtung (19) umfasst, die aus zwei Druckwalzen (20-21) besteht, zwischen welchen die Schichten (2-3) zugeführt werden, um die Zellen der Grundschicht (2) zu brechen, und wobei die Druckwalze (20) an einem Hebel befestigt ist, welcher von einem Druckzylinder (26) gesteuert wird, um die Walzen (20-21) näher zueinander zu bewegen bzw. voneinander zu entfernen.

## Revendications

1. Feuille sous-plancher, constituée d'au moins deux éléments fixés l'un sur l'autre, à savoir une couche de base (2) de mousse plastique, et une couche supérieure (3) dans une matière imperméable à l'eau et à la vapeur d'eau, dans laquelle des canaux (4) sont fournis dans la face extérieure libre de la couche de base (2), dans laquelle la couche de base (2) est constituée d'une mousse plastique comprimée ensemble, dont les alvéoles sont rompues et **caractérisée par le fait que** des canaux (4-5) s'étendent dans différentes directions de la couche de base (2), les canaux s'entrecroisant.

2. Feuille sous-plancher selon la revendication 1, dans laquelle la mousse plastique est une mousse de polystyrène.

3. Feuille sous-plancher selon la revendication 1 ou 2, dans laquelle les canaux (4-5) sont rectilignes.

4. Feuille sous-plancher selon la revendication 1 ou 2, dans laquelle les canaux (4-5) sont incurvés.

5. Feuille sous-plancher selon la revendication 1 ou 2, dans laquelle les canaux (4-5) sont disposés selon une ligne brisée.

6. Feuille sous-plancher selon les revendications 1 à 5, dans laquelle les canaux (4-5) ont une forme triangulaire.

7. Feuille sous-plancher selon la revendication 1, dans laquelle la couche supérieure (3) est formée d'un film plastique.

8. Feuille sous-plancher selon la revendication 7, dans laquelle un film métallique est collé ou déposé en phase vapeur sur ledit film plastique.

9. Feuille sous-plancher selon la revendication 1, dans laquelle la couche supérieure (3) est formée d'un film métallique.

10. Feuille sous-plancher selon la revendication 1, dans laquelle la couche supérieure (3) est fixée à la couche de base (2) par collage.

11. Procédé de réalisation d'une feuille sous-plancher selon l'une quelconque des revendications précédentes, qui comprend les étapes de : détachement d'une couche de base (2) depuis un bloc de mousse plastique (6) ; fourniture sur la couche de base (2) ainsi formée, par collage, d'une couche supérieure (3) de film plastique, de film métallique ou similaire ; application d'entailles dans ladite couche de base (2) et fixation de ces entailles sous l'effet de la chaleur afin de former des canaux (4) ; d'entailles et fixation de ces entailles sous l'effet de la chaleur afin de former des canaux (5) dans la couche de base (2) et enfin compression de la feuille sous-plancher ainsi formé afin de rompre les alvéoles de la mousse plastique à partir de laquelle la couche de base (2) est réalisée.

12. Dispositif de réalisation d'une feuille sous-plancher au moyen du procédé selon la revendication 11, qui comprend un dispositif de coupe (8), qui peut détacher une couche de base (2) depuis un bloc de mousse plastique (6) ; un dispositif d'alimentation pour la couche supérieure (3) sur laquelle une couche de colle est ou sera fournie ; un dispositif (12) constitué d'une lame à denture ou d'un rouleau ou d'un galet (22) avec des saillies ou des nervures (23) alors orientées longitudinalement, ledit rouleau coopérant avec un galet de pression (13) qui peut être déplacé vers ou à distance du rouleau ou le galet (22) au moyen d'un cylindre de pression (24) ; un dispositif (15) constitué d'une lame avec éventuellement une denture saillante ou d'un rouleau ou d'un galet (17) sur lequel sont fournies des nervures orientées transversalement (18), ledit rouleau ou galet (17) pouvant coopérer avec un galet de pression (16) et le rouleau ou galet (17) étant fixé à un levier qui, à son tour, est relié à un cylindre de pression (25) afin d'être apte à rapprocher ou à éloigner les rouleaux (16-17) l'un de l'autre ; et un dispositif (19) constitué de deux galets de pression (20-21) entre lesquels les couches (2-3) sont introduites afin de rompre les alvéoles de la couche de base (2) et le galet de pression (20) étant fixé sur un levier qui est commandé au moyen d'un cylindre de pression (26), afin de rapprocher plus étroitement ou de dégager les galets (20-21) l'un de l'autre, respectivement.
